# EUROPÄISCHE PATENTSCHRIFT

(11) **EP 3 215 762 B1**
(45) Veröffentlichungstag und Bekanntmachung des Hinweises auf die Patenterteilung: **09.01.2019**
(21) Anmeldenummer: 15794499.2
(22) Anmeldetag: 03.11.2015
(51) Int. Cl.: F16H 57/04

(54) **ANTRIEBSEINRICHTUNG FÜR EIN KRAFTFAHRZEUG**
DRIVE DEVICE FOR A MOTOR VEHICLE
DISPOSITIF D'ENTRAÎNEMENT POUR VÉHICULE AUTOMOBILE

(30) Priorität: 03.11.2014 DE 102014016173
(43) Veröffentlichungstag der Anmeldung: 13.09.2017
(73) Patentinhaber: Audi AG, 85045 Ingolstadt (DE)
(72) Erfinder: GREITER, Ivo, 85117 Eitensheim (DE)
(74) Vertreter: Lehle, Josef
(86) Internationale Anmeldenummer: PCT/EP2015/075506
(87) Internationale Veröffentlichungsnummer: WO 2016/071300

(56) Entgegenhaltungen:
- EP-A2- 1 273 829
- WO-A1-2014/056728
- DE-A1-102007 018 504
- DE-A1-102011 075 411
- DE-B3-102012 025 092
- FR-A1- 2 386 743
- US-A- 3 800 913

## Beschreibung

Die Erfindung betrifft eine Antriebseinrichtung für ein Kraftfahrzeug, mit einem Antriebsaggregat, das mit einer Eingangswelle eines Schaltgetriebes wirkverbunden oder wirkverbindbar ist, wobei ein Radsatz des Schaltgetriebes mittels einer Primärschmiermittelpumpe mit Schmiermittel beaufschlagbar und die Primärschmiermittelpumpe mit einer Ausgangswelle des Schaltgetriebes gekoppelt ist, und wobei eine Saugseite der Primärschmiermittelpumpe über einen Filter mit einem Schmiermittelsumpf des Schaltgetriebes verbunden ist. Eine solche Antriebseinrichtung ist aus der WO2014056728A bekannt.

Die Antriebseinrichtung dient beispielsweise dem Bereitstellen eines Antriebsdrehmoments zur Durchführung eines Fahrbetriebs des Kraftfahrzeugs. Die Antriebseinrichtung ist also vorzugsweise Bestandteil des Kraftfahrzeugs. Die Antriebseinrichtung verfügt über das wenigstens eine Antriebsaggregat, welches beispielsweise als Brennkraftmaschine oder als elektrische Maschine ausgestaltet ist. Selbstverständlich kann die Antriebseinrichtung auch über mehrere Antriebsaggregate verfügen, welche in diesem Fall vorzugsweise verschiedenen Typs sind. So kann ein erstes Antriebsaggregat als Brennkraftmaschine und ein zweites Antriebsaggregat als elektrische Maschine ausgestaltet sein.

Das Antriebsaggregat ist über das Schaltgetriebe mit wenigstens einer antreibbaren Achse des Kraftfahrzeugs wirkverbunden beziehungsweise wirkverbindbar. Vorzugsweise liegt in der Wirkverbindung zwischen dem Antriebsaggregat und der wenigstens einen Achse eine Kupplung, insbesondere eine Anfahrkupplung, vor. Die Anfahrkupplung ist beispielsweise zwischen dem Antriebsaggregat und der Eingangswelle des Schaltgetriebes vorgesehen. Das bedeutet, dass mittels der Kupplung die Wirkverbindung zwischen dem Antriebsaggregat und dem Schaltgetriebe beziehungsweise dessen Eingangswelle wahlweise hergestellt oder unterbrochen sein kann.

Die wenigstens eine antreibbare Achse des Kraftfahrzeugs ist dagegen vorzugsweise starr und/oder permanent mit dem Schaltgetriebe, insbesondere einer Ausgangswelle des Schaltgetriebes, wirkverbunden. Das bedeutet, dass die Ausgangswelle bei Durchführung eines Fahrbetriebs des Kraftfahrzeugs, also bei einer von Null verschiedenen Geschwindigkeit des Kraftfahrzeugs, stets in Drehbewegung ist.

Mithilfe des Schaltgetriebes ist bevorzugt eine Vielzahl von Fahrgängen in Form von voneinander unterschiedlichen Übersetzungen zwischen der Eingangswelle und der Ausgangswelle des Schaltgetriebes einstellbar. Die Fahrgänge umfassen beispielsweise mehrere Vorwärtsgänge sowie wenigstens einen, insbesondere genau einen, Rückwärtsgang. Die unterschiedlichen Fahrgänge beziehungsweise Übersetzungen werden mithilfe des Radsatzes des Schaltgetriebes realisiert. Dieses weist insoweit beispielsweise für jeden Fahrgang ein Radpaar, insbesondere ein Zahnradpaar, auf.

Aufgrund von in dem Schaltgetriebe beziehungsweise in dem Radsatz vorliegender Reibung, insbesondere während des Fahrbetriebs des Kraftfahrzeugs, fällt Wärme an. Diese muss, um die Temperatur des Schaltgetriebes beziehungsweise des Radsatzes innerhalb zulässiger Grenzen zu halten, abgeführt werden. Zudem ist eine Schmierung des Radsatzes notwendig. Aus diesem Grund wird dem Radsatz Schmiermittel zugeführt. Das bedeutet, dass wenigstens ein Rad, insbesondere Zahnrad, des Radsatzes mit dem Schmiermittel beaufschlagt wird, vorzugsweise unmittelbar. Besonders bevorzugt werden mehrere, insbesondere alle Räder des Radsatzes mit dem Schmiermittel beaufschlagt, insbesondere unmittelbar.

Beispielsweise kann der Radsatz mittels Tauchschmierung geschmiert beziehungsweise gekühlt werden. Dabei wird, vereinfacht ausgedrückt, so viel Schmiermittel in das Schaltgetriebe eingefüllt, bis bei allen Radpaaren jeweils mindestens ein Rad in das Schmiermittel eintaucht, vorzugsweise um einige Millimeter. Dies führt jedoch dazu, dass ein Teil der Räder deutlich tiefer in das Schmiermittel eintauchen als dies bei anderen Rädern der Fall ist. Dies führt zu vergleichsweise hohen Verlusten durch Planschen.

Zusätzlich oder alternativ wird wenigstens einem der Räder das Schmiermittel unmittelbar zugeführt. Unter der unmittelbaren Beaufschlagung ist dabei beispielsweise zu verstehen, dass das Schmiermittel stromabwärts der Primärschmiermittelpumpe aus einer Austrittsstelle, insbesondere einer Düse, austritt und dabei direkt auf das entsprechende Rad gerichtet ist. Dies wird als Einspritzschmierung bezeichnet. Mithilfe der Einspritzschmierung kann das Planschen theoretisch vollständig vermieden werden.

Eine Förderung des Schmiermittels ist mithilfe der Primärschmiermittelpumpe vorgesehen. Beispielsweise stellt diese das einzige Fördermittel für Schmiermittel dar, welches dem Schaltgetriebe, insbesondere dessen Radsatz, zugeordnet ist. Dem Radsatz wird insoweit lediglich mittels der Primärschmiermittelpumpe Schmiermittel zugeführt.

Aus der Druckschrift DE 10 2011 075 411 A1 ist ein Getriebe eines Kraftfahrzeugs bekannt, mit einer Eingangswelle und einer Ausgangswelle, wobei das Getriebe mindestens ein hydraulisch betätigbares Stellglied und/oder eine hydraulische Schmierung und/oder eine Ölkühlung aufweist, und wobei das Getriebe eine erste Hydraulikpumpe umfasst, welche direkt oder indirekt von der Eingangswelle angetrieben wird, und wobei das Getriebe eine zweite Hydraulikpumpe umfasst, welche direkt oder indirekt von der Ausgangswelle angetrieben wird.

Weiterhin ist aus der Druckschrift DE 10 2007 018 504 A1 ein Getriebe bekannt, in dem eine elektromotorisch angetriebene hydrodynamische Pumpe angeordnet ist, um einen Schmier- und einen Kühlzweig mit einem Betriebsmedium zu versorgen. Prinzipbedingt geht der Förderstrom der hydrodynamischen Pumpe bei niedrigen Temperaturen des Betriebsmediums aufgrund der hohen Viskositäten stark zurück, sodass durch die Aufteilung der Fördermenge auf Kühl- und Schmierzweig die Schmierstellen nicht ausreichend versorgt werden. Damit eine hydrodynamische Pumpe in einem solchen Getriebe auch bei tiefen Temperaturen eingesetzt werden kann, ist zur priorisierten Versorgung der Schmierstellen in der Kühlleitung in Durchströmungsrichtung vor den Spritzdüsen eine bei Unterschreitung der kritischen Temperatur verschließbare Absperreinrichtung angeordnet.

Es ist nun Aufgabe der Erfindung, eine Antriebseinrichtung für ein Kraftfahrzeug vorzuschlagen, welches gegenüber dem Stand der Technik Vorteile aufweist, insbesondere eine höhere Effizienz und mithin einen geringeren Energie- beziehungsweise Kraftstoffverbrauch ermöglicht.

Dies wird erfindungsgemäß mit einer Antriebseinrichtung mit den Merkmalen des Anspruchs 1 erreicht. Dabei ist vorgesehen, dass das Schmiermittel dem Schaltgetriebe durch mehrere Düsen zugeführt wird, wobei mehrere der Düsen jeweils über eine Blende an eine Druckleitung angeschlossen sind, wobei die Druckleitung an eine Druckseite der Primärschmiermittelpumpe angeschlossen ist, und das Schaltgetriebe einen von dem Schmiermittelsumpf verschiedenen Schmiermittelbehälter aufweist, dem durch zumindest eine der Düsen Schmiermittel unmittelbar zuführbar ist.

Grundsätzlich kann selbstverständlich die Primärschmiermittelpumpe mit der Eingangswelle des Schaltgetriebes beziehungsweise mit einer Antriebswelle des Antriebsaggregats gekoppelt sein. Die Antriebswelle des Antriebsaggregats ist mit der Eingangswelle wirkverbunden, insbesondere über die vorstehend erläuterte Kupplung beziehungsweise Anfahrkupplung. Das bedeutet, dass das Antriebsaggregat beziehungsweise dessen Antriebswelle zumindest zeitweise von der Eingangswelle des Schaltgetriebes mittels der Kupplung entkoppelt ist, die Wirkverbindung zwischen diesen also unterbrochen ist. Somit entspricht die Drehzahl der Primärschmiermittelpumpe der Drehzahl des Antriebsaggregats, insbesondere bei geschlossener Kupplung.

Dies führt bei einem Fahrbetrieb in Fahrgängen mit kleinerer Übersetzung in den meisten Fahrzuständen zu einem Überangebot an Schmiermittel. Das bedeutet, dass die Primärschmiermittelpumpe mehr Antriebsleistung aufnimmt als eigentlich erforderlich ist. Zudem können sich - je nach Ausgestaltung der Primärschmiermittelpumpe - erhöhte Quetschverluste ergeben, die dadurch entstehen, dass das Schmiermittel aus Zahnkontakten beziehungsweise Zahnzwischenräumen verdrängt werden muss. Überdies wirkt die Primärschmiermittelpumpe auch in einem Leerlaufbetrieb der Antriebseinrichtung, in welchem die Kupplung geschlossen ist und an dem Schaltgetriebe kein Gang eingelegt ist, stets mit, obwohl kein Schmiermittel benötigt wird. Dadurch entstehen weitere Verluste.

Um dies zu vermeiden, kann die Primärschmiermittelpumpe mittels eines Elektromotors angetrieben werden. Dies hat den Vorteil, dass eine Schmiermittelfördermenge an den jeweiligen Lastzustand der Antriebseinrichtung anpassbar ist. Weil jedoch die für den Betrieb des Elektromotors notwendige Energie mithilfe eines Generators aus der Antriebsleistung des Antriebsaggregats erzeugt werden muss, ist der Wirkungsgrad vergleichsweise gering und beträgt beispielsweise höchstens 50 %. Zudem ist ein hohes verfügbares Antriebsdrehmoment an einer Pumpenwelle der Primärschmiermittelpumpe erforderlich, um eine ausreichende Schmiermittelfördermenge auch bei sehr niedrigen Temperaturen sicherzustellen. Es wird insoweit ein vergleichsweise großer Elektromotor benötigt. Dies verursacht Kosten und Zusatzgewicht.

Alternativ könnten zur Schmierung des Radsatzes Sondermaßnahmen herangezogen werden, wie beispielsweise das Durchführen einer Tauchschmierung bei niedrigen Temperaturen und einer Einspritzschmierung bei höheren Temperaturen. Dies ist jedoch ebenfalls nur mit Zusatzmaßnahmen möglich, die bezüglich der Kosten und des Gewichts äußerst nachteilig sind. Ist das Schaltgetriebe als Handschaltgetriebe ausgestaltet, so wäre allein für den Elektromotor ein Steuergerät erforderlich. Zudem muss auch bei Ausfall des Elektromotors die Schmierung des Schaltgetriebes beziehungsweise des Radsatzes durch entsprechende Maßnahmen auch ohne die Primärschmiermittelpumpe gewährleistet werden oder eine entsprechende Warnung an einen Fahrer des Kraftfahrzeugs abgesetzt werden.

Aus diesen Überlegungen heraus ist insoweit erfindungsgemäß vorgesehen, dass die Primärschmiermittelpumpe mit der Ausgangswelle des Schaltgetriebes gekoppelt ist, vorzugsweise starr und/oder permanent. Das bedeutet, dass die Primärschmiermittelpumpe stets nur dann betrieben wird, wenn die Ausgangswelle des Schaltgetriebes sich dreht. Dies ist insbesondere bei einem Fahrbetrieb des Kraftfahrzeugs, also bei einer von Null verschiedenen Geschwindigkeit des Kraftfahrzeugs, der Fall. Wie bereits vorstehend erläutert, wird vorzugsweise der Radsatz allein mittels der Primärschmiermittelpumpe mit Schmiermittel beaufschlagt. Das bedeutet im Lichte des Vorstehenden, dass der Radsatz nur dann mit Schmiermittel versorgt wird, wenn sich die Ausgangswelle des Schaltgetriebes in Drehbewegung befindet, beispielsweise weil die Geschwindigkeit des Kraftfahrzeugs von Null verschieden ist.

Unter der Kopplung der Primärschmiermittelpumpe mit der Ausgangswelle des Schaltgetriebes ist zu verstehen, dass zwischen diesen eine permanente Wirkverbindung vorliegt. Das bedeutet jedoch nicht, dass die Primärschmiermittelpumpe unmittelbar an die Ausgangswelle angeschlossen beziehungsweise an dieser angreifen muss, wobei dies selbstverständlich der Fall sein kann. Vielmehr soll die Primärschmiermittelpumpe mit der Ausgangsseite des Schaltgetriebes permanent wirkverbunden sein. Entsprechend kann die Primärschmiermittelpumpe auch an einer Zwischenwelle oder einer Ritzelwelle des Schaltgetriebes angreifen, insbesondere unmittelbar angreifen. Besonders bevorzugt steht insoweit die Primärschmiermittelpumpe in starrer und/oder permanenter Wirkverbindung mit wenigstens einer Achse, insbesondere wenigstens einem an der Achse vorgesehenen Rad des Kraftfahrzeugs.

Aus der beschriebenen Ausgestaltung ergeben sich die Vorteile, dass kein Steuergerät notwendig und sowie eine hohe Betriebssicherheit gegeben ist. Zudem ist die Schmierung des Schaltgetriebes beziehungsweise des Radsatzes auch bei sehr niedrigen Temperaturen problemlos ohne Sondermaßnahmen möglich. Außerdem ist die vorgestellte Lösung im Vergleich zu einem Antrieb der Primärschmiermittelpumpe mittels eines Elektromotors sehr kostengünstig.

In einer weiteren Ausgestaltung der Erfindung ist vorgesehen, dass mittels der Primärschmiermittelpumpe zusätzlich eine Abtriebsgetriebestufe des Schaltgetriebes mit Schmiermittel beaufschlagbar ist. Die Abtriebsgetriebestufe ist neben dem Radsatz dem Schaltgetriebe zugeordnet beziehungsweise bildet einen Bestandteil von diesem. Der Radsatz weist wie vorstehend bereits erläutert mehrere Radpaare auf, mittels welchen die unterschiedlichen Fahrgänge beziehungsweise die unterschiedlichen Übersetzungen des Schaltgetriebes realisiert werden. Über den Radsatz ist insoweit die Eingangswelle des Schaltgetriebes vorzugsweise mit der Zwischenwelle des Schaltgetriebes wirkverbunden beziehungsweise wirkverbindbar.

Die Wirkverbindung zwischen der Eingangswelle und der Zwischenwelle kann, wie vorstehend ebenfalls bereits angedeutet, unterbrochen sein, wenn an dem Schaltgetriebe kein Fahrgang eingelegt ist. Die Zwischenwelle ist dagegen vorzugsweise starr und/oder permanent mit der Ausgangswelle des Schaltgetriebes wirkverbunden, beispielsweise über die Abtriebsgetriebestufe. Das bedeutet, dass in der Wirkverbindung zwischen der Zwischenwelle und der Ausgangswelle ein weiteres Radpaar, insbesondere ein weiteres Zahnradpaar, vorliegt, über welches die Wirkverbindung zwischen den genannten Wellen hergestellt ist. Es ist nun vorgesehen, dass die Primärschmiermittelpumpe nicht lediglich Schmiermittel für den Radsatz, sondern zusätzlich auch für diese Abtriebsgetriebestufe zur Verfügung stellt. Beispielsweise wird die Abtriebsgetriebestufe beziehungsweise deren Radpaar unmittelbar mit dem Schmiermittel beaufschlagt, beispielsweise durch entsprechende Ausrichtung einer stromabwärts der Primärschmiermittelpumpe vorgesehenen Düse.

Eine Weiterbildung der Erfindung sieht vor, dass die Primärschmiermittelpumpe drehrichtungsunabhängig mit der Ausgangswelle gekoppelt ist. Die Drehrichtung der Ausgangswelle unterscheidet sich beispielsweise bei einer Vorwärtsfahrt des Kraftfahrzeugs von der bei einer Rückwärtsfahrt des Kraftfahrzeugs vorliegenden Drehrichtung. Es kann nun vorgesehen sein, dass die Primärschmiermittelpumpe derart mit der Ausgangswelle gekoppelt ist, dass lediglich bei der Vorwärtsfahrt des Kraftfahrzeugs Schmiermittel mittels der Primärschmiermittelpumpe gefördert wird, also der Radsatz des Schaltgetriebes nur dann mit dem Schmiermittel beaufschlagt wird.

Bevorzugt ist jedoch die drehrichtungsunabhängige Kopplung der Primärschmiermittelpumpe mit der Ausgangswelle realisiert. Diese wird beispielsweise durch eine entsprechende Kopplungsvorrichtung in der Wirkverbindung zwischen der Primärschmiermittelpumpe und der Ausgangswelle realisiert. Die Kopplungsvorrichtung weist dabei beispielsweise wenigstens einen Freilauf, insbesondere mehrere Freiläufe, sowie ein Drehrichtungsumkehren des Radpaares, insbesondere Zahnradpaares, auf. Beispielsweise ist die Primärschmiermittelpumpe über einen der Freiläufe derart mit der Ausgangswelle gekoppelt, dass sie in ihrer Betriebsdrehrichtung betrieben wird, falls die Ausgangswelle eine der Vorwärtsfahrt des Kraftfahrzeugs entsprechende Drehrichtung aufweist. Um auch die umgekehrte Drehrichtung der Ausgangswelle in die Betriebsdrehrichtung der Primärschmiermittelpumpe umzusetzen, ist dagegen die Ausgangswelle über einen weiteren Freilauf und das drehrichtungsumkehrende Radpaar mit der Primärschmiermittelpumpe wirkverbunden. Die beiden Freiläufe weisen dabei entgegengesetzte Freilaufrichtungen auf.

Alternativ oder zusätzlich kann selbstverständlich die Primärschmiermittelpumpe selbst drehrichtungsabhängig sein. Beispielsweise weist die Primärschmiermittelpumpe ein drehrichtungsunabhängiges Arbeitsprinzip auf, insbesondere liegt sie als Kolbenpumpe vor. Zusätzlich oder alternativ kann der Primärschmiermittelpumpe wenigstens ein Ventil, insbesondere ein Rückschlagventil, zugeordnet sein, sodass sie drehrichtungsunabhängig arbeitet. Zum Beispiel kann die Primärschmiermittelpumpe in diesem Fall als Zahnradpumpe ausgestaltet sein. Dieser ist das wenigstens eine Ventil zugeordnet. Vorzugsweise sind mehrere Ventile, insbesondere Rückschlagventile, vorgesehen, beispielweise genau zwei Ventile oder genau vier Ventile.

Die Erfindung sieht vor, dass das Schmiermittel dem Schaltgetriebe durch mehrere Düsen zugeführt wird. Wie bereits vorstehend erläutert, sind die Düsen vorzugsweise derart ausgerichtet, dass wenigstens ein Radpaar des Radsatzes unmittelbar mit dem Schmiermittel beaufschlagt wird. Besonders bevorzugt ist jedem Radpaar des Radsatzes und/oder jedem Radpaar der Abtriebsgetriebestufe eine der Düsen zugeordnet, sodass insgesamt die Anzahl der Düsen der Anzahl der Radpaare in dem Radsatz und/oder der Abtriebsgetriebestufe entspricht.

Weiterhin sieht die Erfindung vor, dass mehrere der Düsen jeweils über eine Blende an eine Druckleitung angeschlossen sind, wobei die Druckleitung an eine Druckseite der Primärschmiermittelpumpe angeschlossen ist. Die Primärschmiermittelpumpe fördert Schmiermittel von einer Saugseite in Richtung der Druckseite beziehungsweise auf die Druckseite. Auf der Druckseite liegt insoweit ein höherer Druck vor als auf der Saugseite. An die Druckseite ist die Druckleitung angeschlossen, sodass die Primärschmiermittelpumpe das Schmiermittel in Richtung der Druckleitung fördert.

Über die Druckleitung wird das Schmiermittel den Düsen zugeführt, wobei zwischen der Druckleitung und vorzugsweise jeder Düse jeweils eine der Blenden strömungstechnisch angeordnet ist. Selbstverständlich kann auch nur zwischen der Druckleitung und einer der Düsen oder mehreren der Düse jeweils eine der Blenden vorliegen. Die Blenden sind vorzugsweise derart ausgestaltet, dass jeder Düse die von ihr benötigte Schmiermittelmenge beziehungsweise der benötigte Schmiermitteldurchsatz zugeführt wird.

Theoretisch ist der Druckverlust an den Blenden von der Viskosität des Schmiermittels unabhängig, sodass sie derart ausgelegt werden können, dass auch bei sehr kleinen Schmiermittelmassenströmen der Druckverlust an den Blenden groß genug ist, um auch geodätisch höherliegende Düsen mit einer ausreichenden Schmiermittelmenge zu versorgen. Im Gegensatz zu entsprechend dimensionierten Düsen entsteht an den Blenden auch bei niedrigen Temperaturen, also hohen Viskositäten des Schmiermittels, kein zu hoher Druckverlust.

In einer weiteren Ausgestaltung der Erfindung ist vorgesehen, dass die Saugseite der Primärschmiermittelpumpe über einen Filter mit einem Schmiermittelsumpf des Schaltgetriebes verbunden ist. Zusätzlich kann es vorgesehen sein, dass die Druckseite über ein Überdruckventil an eine Saugseite der Primärschmiermittelpumpe angeschlossen ist. Beispielsweise bei sehr niedrigen Schmiermitteltemperaturen und hohen Fahrgeschwindigkeiten kann der Druck auf der Druckseite der Schmiermittelpumpe sehr stark ansteigen. Um die druckführenden Bauteile nicht für einen solchen hohen Druck auslegen zu müssen, kann das Überdruckventil vorgesehen sein, über welches Schmiermittel von der Druckseite zurück auf die Saugseite gelangen kann, sobald der Druck auf der Druckseite einen bestimmten Maximaldruck überschreitet. Der Maximaldruck beträgt beispielsweise mindestens 10 bar, mindestens 15 bar oder mindestens 20 bar.

Zusätzlich oder alternativ ist in der Strömungsverbindung zwischen der Saugseite der Primärschmiermittelpumpe und dem Schmiermittelsumpf des Schaltgetriebes der Filter angeordnet. Dessen Druckverlust kann durch entsprechende Ausgestaltung des Filters derart gewählt sein, dass der Druck auf der Druckseite der Primärschmiermittelpumpe ebenfalls auf den genannten Wert begrenzt ist. Zwar kann eine derartige Ausgestaltung zu Kavitation in der Primärschmiermittelpumpe führen, jedoch kann sich unter Umständen das Überdruckventil erübrigen.

Die Erfindung sieht vor, dass das Schaltgetriebe einen von dem Schmiermittelsumpf verschiedenen Schmiermittelbehälter aufweist, dem durch zumindest eine der Düsen Schmiermittel unmittelbar zuführbar ist. Der Schmiermittelsumpf liegt beispielsweise an einer geodätisch tiefsten Stelle eines Schmiermittelkreislaufs dar, welchem die Primärschmiermittelpumpe sowie der Schmiermittelsumpf zugeordnet sind. Die Primärschmiermittelpumpe saugt das Schmiermittel aus dem Schmiermittelsumpf an und fördert dieses in Richtung des Schaltgetriebes beziehungsweise des Radsatzes. Nach dem Beaufschlagen des Radsatzes mit dem Schmiermittel kann dieses zurück in den Schmiermittelsumpf gelangen, aus welchem es erneut von der Primärschmiermittelpumpe angesaugt werden kann.

Zusätzlich zu dem Schmiermittelsumpf ist nun der Schmiermittelbehälter vorgesehen. Diesem wird durch die wenigstens eine der Düsen Schmiermittel zugeführt, wenn die Primärschmiermittelpumpe das Schmiermittel fördert. Auch dieser Düse kann gemäß den vorstehenden Ausführungen eine der Blenden zugeordnet sein. Während des Betriebs der Primärschmiermittelpumpe wird insoweit der Schmiermittelbehälter mit Schmiermittel gefüllt.

Eine weitere Ausgestaltung der Erfindung sieht vor, dass der Schmiermittelbehälter, insbesondere an seiner geodätisch tiefsten Stelle, einen Ablauf aufweist, durch den eine unmittelbare Strömungsverbindung zu dem Schmiermittelsumpf vorliegt. Durch den Ablauf kann Schmiermittel aus dem Schmiermittelbehälter in den Schmiermittelsumpf des Schaltgetriebes gelangen. Der Ablauf ist vorzugsweise derart angeordnet, dass der Schmiermittelbehälter vollständig leerlaufen kann, insbesondere falls ihm kein Schmiermittel mehr zugeführt wird. Entsprechend soll der Ablauf an der geodätisch tiefsten Stelle des Schmiermittelbehälters vorliegen.

In einer Weiterbildung der Erfindung ist vorgesehen, dass der Schmiermittelbehälter wenigstens einen Überlauf aufweist, der geodätisch höher liegt als der Ablauf und eine unmittelbare Strömungsverbindung zu dem Schmiermittelsumpf herstellt. Der Überlauf ist insoweit beispielsweise von einem Boden des Schmiermittelbehälters beabstandet, wobei in dem Boden der Ablauf angeordnet sein kann. Von Bedeutung ist lediglich, dass in einer Einbauposition der Antriebseinrichtung der Schmiermittelbehälter derart ausgestaltet ist, dass der Ablauf ein vollständiges Entleeren des Schmiermittelbehälters ermöglicht, während dies für den wenigstens einen Überlauf nicht der Fall ist. Durch den Überlauf soll entsprechend lediglich Schmiermittel aus dem Schmiermittelbehälter austreten können, wenn eine bestimmte Mindestmenge des Schmiermittels in dem Schmiermittelbehälter vorliegt.

Durch den Überlauf kann das Schmiermittel aus dem Schmiermittelbehälter unmittelbar in den Schmiermittelsumpf gelangen. Beispielsweise sind der Ablauf und der Überlauf an eine gemeinsame Schmiermittelleitung angeschlossen, welche auf ihrer dem Überlauf und dem Ablauf abgewandten Seite in den Schmiermittelsumpf einmündet. Vorzugsweise sind mehrere Überläufe vorgesehen, von welchen wenigstens einige Abmessungen aufweisen, welche sich von den Abmessungen der anderen Überläufe unterscheiden.

Insbesondere sind die Überläufe geodätisch gesehen übereinander angeordnet, wobei die Überläufe bevorzugt umso größer sind, je höher sie geodätisch liegen. Die Überläufe sind beispielsweise dazu ausgestaltet, bei einer bestimmten Querbeschleunigung und/oder Längsbeschleunigung des Kraftfahrzeugs und mithin der Antriebseinrichtung ein Überlaufen des Schmiermittels aus dem Schmiermittelbehälter in den Schmiermittelsumpf zu ermöglichen. Der Überlauf beziehungsweise die Überläufe sollen besonders bevorzugt derart ausgestaltet sein, dass bei Erreichen oder Überschreiten einer bestimmten Querbeschleunigung und/oder Längsbeschleunigung das in dem Schmiermittelbehälter enthaltene Schmiermittel zumindest größtenteils, insbesondere vollständig, durch den Überlauf in den Schmiermittelsumpf gelangt.

Mit einer derartigen Ausgestaltung des Schmiermittelbehälters kann erreicht werden, dass der Schmiermittelbehälter bei einer Konstantfahrt des Kraftfahrzeugs voll ist, der Schmiermittelstand in dem Schmiermittelsumpf also entsprechend abgesenkt ist. Bei einer Volllastbeschleunigung und/oder bei Kurvenfahrt mit hohen Querbeschleunigungen hingegen schwappt das Schmiermittel aus dem Schmiermittelbehälter in den Schmiermittelsumpf, wodurch der Schmiermittelstand dort erhöht wird. Entsprechend ist sichergestellt, dass die Primärschmiermittelpumpe auch bei hohen Querbeschleunigungen und/oder Längsbeschleunigungen stets zuverlässig Schmiermittel aus dem Schmiermittelsumpf ansaugen kann, also keine Luft fördert.

Prinzipiell wäre es mit einer derartigen Ausgestaltung zudem möglich, die Schmierung und/oder Kühlung des Schaltgetriebes bei einer Rückwärtsfahrt des Kraftfahrzeugs auch ohne drehrichtungsunabhängige Kopplung der Primärschmiermittelpumpe mit der Ausgangswelle zu gewährleisten. Dazu müsste der Schmiermittelbehälter eine ausreichende Schmiermittelmenge aufnehmen, um einen geodätischen Höhenunterschied zwischen einem Radpaar des Rückwärtsgangs und tieferliegenden Rädern beziehungsweise Radpaaren, die bei der Konstantfahrt nicht in das Schmiermittel eintauchen sollen, zu überbrücken.

Schließlich kann in einer weiteren Ausgestaltung der Erfindung vorgesehen sein, dass der Radsatz und/oder die Abtriebsgetriebestufe wenigstens ein Zahnrad aufweisen, das in den Schmiermittelsumpf eingreift. Das Zahnrad ist insoweit wenigstens bereichsweise in dem Schmiermittelsumpf angeordnet, wobei diese bevorzugt derart vorgesehen ist, dass bei einem bestimmten Schmiermittelstand in dem Schmiermittelsumpf das Zahnrad in das Schmiermittel wenigstens teilweise eintaucht.

Die Erfindung betrifft selbstverständlich weiterhin ein Kraftfahrzeug mit einer Antriebseinrichtung, welche gemäß den vorstehenden Ausführungen ausgebildet sein kann.

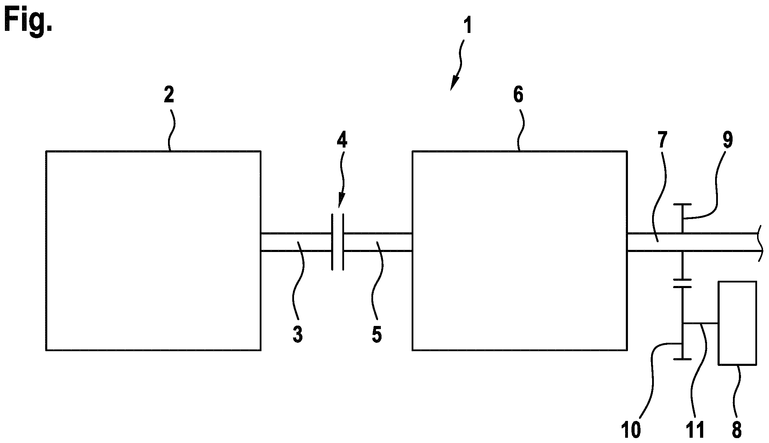

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung für ein Kraftfahrzeug.

Die Figur zeigt eine schematische Darstellung einer Antriebseinrichtung 1, die beispielsweise Bestandteil eines nicht näher dargestellten Kraftfahrzeugs ist. Die Antriebseinrichtung 1 weist ein Antriebsaggregat 2 auf, welches beispielsweise als Brennkraftmaschine vorliegt. Das Antriebsaggregat 2 verfügt über eine Antriebswelle 3, die über eine Kupplung 4 mit einer Eingangswelle 5 eines Schaltgetriebes 6 wirkverbunden beziehungsweise wirkverbindbar ist. Das Schaltgetriebe 6 verfügt weiterhin über eine Ausgangswelle 7, welche vorzugsweise starr und/oder permanent mit wenigstens einer angetriebenen Achse des Kraftfahrzeugs (hier nicht dargestellt) wirkverbunden ist.

Das Schaltgetriebe 6 verfügt über einen hier nicht dargestellten Radsatz, über welchen die Eingangswelle 5 mit der Ausgangswelle 7 wirkverbunden beziehungsweise wirkverbindbar ist. Dabei können mithilfe des Schaltgetriebes 6 unterschiedliche Fahrgänge beziehungsweise Übersetzungen zwischen der Eingangswelle 5 und der Ausgangswelle 7 eingestellt werden.

Der Radsatz des Schaltgetriebes 6 ist mittels einer Primärschmiermittelpumpe 8 mit Schmiermittel beaufschlagbar. Die Primärschmiermittelpumpe 8 ist nun mit der Ausgangswelle 7 des Schaltgetriebes 6 gekoppelt. Beispielsweise ist zu diesem Zweck ein Zahnrad 9 starr mit der Ausgangswelle 7 verbunden beziehungsweise auf dieser angeordnet. Das Zahnrad 9 kämmt mit einem weiteren Zahnrad 10, welches beispielsweise auf einer Eingangswelle 11 der Primärschmiermittelpumpe 8 angeordnet ist. Alternativ kann es jedoch auch vorgesehen sein, die Primärschmiermittelpumpe 8 drehrichtungsunabhängig mit der Ausgangswelle 7 zu koppeln, wozu eine entsprechende Kopplungseinrichtung vorgesehen ist.

## Patentansprüche

1. Antriebseinrichtung (1) für ein Kraftfahrzeug, mit einem Antriebsaggregat (2), das mit einer Eingangswelle (5) eines Schaltgetriebes (6) wirkverbunden oder wirkverbindbar ist, wobei ein Radsatz des Schaltgetriebes (6) mittels einer Primärschmiermittelpumpe (8) mit Schmiermittel beaufschlagbar und die Primärschmiermittelpumpe (8) mit einer Ausgangswelle (7) des Schaltgetriebes gekoppelt ist, und wobei eine Saugseite der Primärschmiermittelpumpe (8) über einen Filter mit einem Schmiermittelsumpf des Schaltgetriebes (6) verbunden ist, **dadurch gekennzeichnet, dass** das Schmiermittel dem Schaltgetriebe (6) durch mehrere Düsen zugeführt wird, wobei mehrere der Düsen jeweils über eine Blende an eine Druckleitung angeschlossen sind und die Druckleitung an eine Druckseite der Primärschmiermittelpumpe (8) angeschlossen ist, wobei das Schaltgetriebe (6) einen von dem Schmiermittelsumpf verschiedenen Schmiermittelbehälter aufweist, dem durch zumindest eine der Düsen Schmiermittel unmittelbar zuführbar ist.

2. Antriebseinrichtung nach Anspruch 1, **dadurch gekennzeichnet, dass** mittels der Primärschmiermittelpumpe (8) zusätzlich eine Abtriebsgetriebestufe des Schaltgetriebes (6) mit Schmiermittel beaufschlagbar ist.

3. Antriebseinrichtung nach einem der vorhergehenden Ansprüche, **dadurch gekennzeichnet, dass** die Primärschmiermittelpumpe (8) drehrichtungsunabhängig mit der Ausgangswelle (7) gekoppelt ist.

4. Antriebseinrichtung nach einem der vorhergehenden Ansprüche, **dadurch gekennzeichnet, dass** die Druckseite über ein Überdruckventil an eine Saugseite der Primärschmiermittelpumpe (8) angeschlossen ist.

5. Antriebseinrichtung nach einem der vorhergehenden Ansprüche, **dadurch gekennzeichnet, dass** der Schmiermittelbehälter, insbesondere an einer geodätisch tiefsten Stelle, einen Ablauf aufweist, durch den eine unmittelbare Strömungsverbindung zu dem Schmiermittelsumpf vorliegt.

6. Antriebseinrichtung nach einem der vorhergehenden Ansprüche, **dadurch gekennzeichnet, dass** der Schmiermittelbehälter wenigstens einen Überlauf aufweist, der geodätisch höher liegt als der Ablauf und eine unmittelbare Strömungsverbindung zu dem Schmiermittelsumpf herstellt.

7. Antriebseinrichtung nach einem der vorhergehenden Ansprüche, **dadurch gekennzeichnet, dass** der Radsatz und/oder die Abtriebsgetriebestufe wenigstens ein Zahnrad aufweisen, das in den Schmiermittelsumpf eingreift.

## Claims

1. Drive device (1) for a motor vehicle, having a drive unit (2) which is operatively connected or able to be operatively connected to an input shaft (5) of a gearbox (6), wherein a wheel set of the gearbox (6) is able to be loaded with lubricant by means of a primary lubricant pump and the primary lubricant pump (8) is coupled to an output shaft (7) of the gearbox, and wherein a suction side of the primary lubricant pump (8) is connected to a lubricant sump of the gearbox (6) via a filter, **characterised in that** the lubricant is supplied to the gearbox (6) through several nozzles, wherein several of the nozzles are connected to a pressure line respectively via an aperture and the pressure line is connected to a pressure side of the primary lubricant pump (8), wherein the gearbox (6) has a lubricant container which is different to the lubricant sump, to which lubricant container lubricant is able to be supplied directly through at least one of the nozzles.

2. Drive device according to claim 1, **characterised in that,** additionally, a drive gear stage of the gearbox (6) is able to be loaded with lubricant by means of the primary lubricant pump (8).

3. Drive device according to any one of the preceding claims, **characterised in that** the primary lubricant pump (8) is coupled to the output shaft (7) to be independent of the direction of rotation.

4. Drive device according to any one of the preceding claims, **characterised in that** the pressure side is connected to a suction side of the primary lubricant pump (8) via a relief valve.

5. Drive device according to any one of the preceding claims, **characterised in that** the lubricant container has an outlet, in particular at a geodetically deepest point, through which a direct flow connection to the lubricant sump is present.

6. Drive device according to any one of the preceding claims, **characterised in that** the lubricant container has at least one overflow, which lies geodetically higher than the outlet and produces a direct flow connection to the lubricant sump.

7. Drive device according to any one of the preceding claims, **characterised in that** the wheel set and/or the drive gear stage have at least one toothed wheel which engages with the lubricant sump.

## Revendications

1. Dispositif de propulsion (1) pour un véhicule automobile, avec un groupe de propulsion (2) qui est ou peut être en liaison active avec un arbre d'entrée (5) d'une boîte de vitesses (6), dans lequel un train de pignons de la boîte de vitesses (6) peut être alimenté en lubrifiant au moyen d'une pompe de lubrification primaire (8) et la pompe de lubrification primaire (8) est couplée à un arbre de sortie (7) de la boîte de vitesses et dans lequel un côté aspiration de la pompe de lubrification primaire (8) est relié par l'intermédiaire d'un filtre à un collecteur de lubrifiant de la boîte de vitesses (6), **caractérisé en ce que** le lubrifiant est amené à la boîte de vitesses (6) par plusieurs buses, dans lequel plusieurs des buses sont raccordées à une conduite de refoulement à chaque fois par l'intermédiaire d'un diaphragme et la conduite de refoulement étant raccordée à un côté refoulement de la pompe de lubrification primaire (8), dans lequel la boîte de vitesses (6) comporte un récipient de lubrifiant qui est différent du collecteur de lubrifiant et auquel du lubrifiant peut être amené directement par au moins l'une des buses.

2. Dispositif de propulsion selon la revendication 1, **caractérisé en ce qu'**un étage de groupe mené de la boîte de vitesses (6) peut en plus être alimenté en lubrifiant au moyen de la pompe de lubrification primaire (8).

3. Dispositif de propulsion selon l'une quelconque des revendications précédentes, **caractérisé en ce que** la pompe de lubrification primaire (8) est couplée à l'arbre de sortie (7) indépendamment du sens de rotation.

4. Dispositif de propulsion selon l'une quelconque des revendications précédentes, **caractérisé en ce que** le côté refoulement est raccordé à un côté aspiration de la pompe de lubrification primaire (8) par l'intermédiaire d'une soupape de surpression.

5. Dispositif de propulsion selon l'une quelconque des revendications précédentes, **caractérisé en ce que** le récipient de lubrifiant comporte, en particulier au point géodésique le plus bas, une évacuation par laquelle existe une liaison d'écoulement directe vers le collecteur de lubrifiant.

6. Dispositif de propulsion selon l'une quelconque des revendications précédentes, **caractérisé en ce que** le récipient de lubrifiant comporte au moins un trop-plein qui est plus élevé d'un point de vue géodésique que l'évacuation et qui établit une liaison d'écoulement directe vers le collecteur de lubrifiant.

7. Dispositif de propulsion selon l'une quelconque des revendications précédentes, **caractérisé en ce que** le train de pignons et/ou l'étage de groupe mené comportent au moins une roue dentée qui pénètre dans le collecteur de lubrifiant.
